# EUROPEAN PATENT APPLICATION

(11) **EP 4 087 173 A1**
(43) Date of publication of application: **09.11.2022**
(21) Application number: 22170518.9
(22) Date of filing: 28.04.2022
(51) Int. Cl.: H04L 5/00, H04W 16/14, H04W 72/04, H04W 72/12

(54) **BASE STATION SUPPORTING DYNAMIC SPECTRUM SHARING BETWEEN HETEROGENEOUS NETWORKS AND WIRELESS COMMUNICATION SYSTEM INCLUDING THE SAME**

(30) Priority: 07.05.2021 KR 20210059511; 29.07.2021 KR 20210100136
(71) Applicant: Samsung Electronics Co., Ltd., Suwon-si, Gyeonggi-do 16677 (KR)
(72) Inventor: PARK, Jungmin, Suwon-si, Gyeonggi-do 16677 (KR); KIM, Jinho, Suwon-si, Gyeonggi-do 16677 (KR)
(74) Representative: Kuhnen & Wacker Patent- und Rechtsanwaltsbüro PartG mbB

(57) **Abstract**

A wireless communication system including a serving base station configured to support dynamic spectrum sharing (DSS) between a first network and a second network, and a terminal configured to communicate with the serving base station based on the first network, the serving base station is configured to transmit location information of a cell-specific reference signal (CRS) to the terminal, the CRS being received from a neighboring base station connected to the second network, perform rate matching on a physical downlink shared channel (PDSCH) based on the location information of the CRS to obtain a rate matched PDSCH, and transmit the rate matched PDSCH to the terminal.

## Description

### CROSS-REFERENCE TO RELATED APPLICATIONS

This application is based on and claims priority under 35 U.S.C. §119 to Korean Patent Application Nos. 10-2021-0059511 and 10-2021-0100136, respectively filed on May 7, 2021 and July 29, 2021, in the Korean Intellectual Property Office, the disclosures of which are incorporated by reference herein in their entireties.

### BACKGROUND

The inventive concepts relate to a base station supporting dynamic spectrum sharing (DSS) between heterogeneous networks and a wireless communication system including the same.

In 3rd Generation Partnership Project (3GPP) Release 15, DSS technology is suggested to support smooth migration of the frequency band of a long-term evolution (LTE) network to a new radio (NR) network. DDS may include various detailed techniques for mutual, dynamic coexistence of an LTE network and an NR network in the same frequency domain.

For example, a cell reference signal (CRS) of an LTE network is an always-on signal, and a terminal may expect that a CRS is always transmitted from an LTE base station. Accordingly, when the terminal located in a cell provided by an NR base station in a DSS environment transmits and receives data using a physical downlink shared channel (PDSCH), which is a data transmission channel, the terminal may arrange in advance to perform rate matching on the PDSCH at a location(s) of a resource element(s) (RE(s)) allocated to the CRS. However, there is a challenge in that the NR data reception performance of the terminal is reduced because the CRS transmitted from a neighboring LTE cell acts as interference when the terminal receives data using an NR PDSCH.

### SUMMARY

The inventive concepts provide a base station capable of mitigating the degradation of new radio (NR) data reception performance due to an interference of a neighboring long-term evolution (LTE) cell and reducing the implementation complexity of a terminal in which a cell reference signal (CRS) transmitted from the neighboring LTE cell acts as the interference when the terminal receives an NR physical downlink shared channel (PDSCH) in a dynamic spectrum sharing (DSS) environment, and a wireless communication system including the base station.

According to an aspect of the inventive concepts, there is provided a wireless communication system including a serving base station configured to support dynamic spectrum sharing (DSS) between a first network and a second network, and a terminal configured to communicate with the serving base station based on the first network, the serving base station is configured to transmit location information of a cell-specific reference signal (CRS) to the terminal, the CRS being received from a neighboring base station connected to the second network, perform rate matching on a physical downlink shared channel (PDSCH) based on the location information of the CRS to obtain a rate matched PDSCH, and transmit the rate matched PDSCH to the terminal.

According to an aspect of the inventive concepts, there is provided an operating method of a base station configured to support dynamic spectrum sharing (DSS) between a new radio (NR) network and a long term evolution (LTE) network, the operating method including setting a cell-specific reference signal (CRS) rate matching pattern with respect to a neighboring LTE cell, determining whether to perform CRS rate matching on the neighboring LTE cell, the CRS rate matching being based on the CRS rate matching pattern, and performing rate matching on an NR physical downlink shared channel (PDSCH) based on the CRS rate matching pattern in response to determining to perform the CRS rate matching.

According to an aspect of the inventive concepts, there is provided a base station configured to support dynamic spectrum sharing (DSS) between a new radio (NR) network and a long term evolution (LTE) network, the base station is configured to determine whether to activate a first cell-specific reference signal (CRS) rate matching pattern and whether to activate a second CRS rate matching pattern, the first CRS rate matching pattern corresponding to a first neighboring LTE cell, and the second CRS rate matching pattern corresponding to a second neighboring LTE cell, perform rate matching on resource elements (REs) allocated to a first CRS of the first neighboring LTE cell in response to determining to activate the first CRS rate matching pattern corresponding to the first neighboring LTE cell, and map a new radio (NR) physical downlink shared channel (PDSCH) to REs allocated to a second CRS of the second neighboring LTE cell in response to determining not to activate the second CRS rate matching pattern corresponding to the second neighboring LTE cell.

According to an aspect of the inventive concepts, there is provided a wireless communication system configured to support a single transmission/reception point (TRP), the wireless communication system including a new radio (NR) cell configured to support dynamic spectrum sharing (DSS) between an NR network and a long term evolution (LTE) network, the NR cell corresponding to the single TRP, an LTE cell connected to the LTE network and configured to transmit an interference cell-specific reference signal (CRS) to a terminal, and the terminal configured to receive an NR physical downlink shared channel (PDSCH) from the NR cell based on the NR network, the NR cell is configured to transmit CRS rate matching pattern information to the terminal through a radio resource control (RRC) message, and perform rate matching on the NR PDSCH using the CRS rate matching pattern information, the CRS rate matching pattern information comprising location information of resource element (REs) allocated to the interference CRS of the LTE cell.

### BRIEF DESCRIPTION OF THE DRAWINGS

Embodiments of the inventive concepts will be more clearly understood from the following detailed description taken in conjunction with the accompanying drawings in which:
FIG. 1 is a diagram of a wireless communication system according to embodiments;
FIG. 2 is a block diagram of an implementation of a base station according to embodiments;
FIG. 3 is a block diagram of an implementation of a user equipment (UE) according to embodiments;
FIG. 4 is a diagram illustrating a basic structure of a time-frequency resource provided in the wireless communication system of FIG. 1;
FIGS. 5 and 6 illustrate embodiments of a rate matching pattern of a cell reference signal (CRS) in a dynamic spectrum sharing (DSS) environment between new radio (NR) and long-term evolution (LTE) networks;
FIG. 7 is a flowchart illustrating an operating method of a base station according to embodiments;
FIGS. 8 and 9 illustrate an example of a structure of a resource block (RB) according to activation/deactivation of a CRS rate matching pattern according to embodiments;
FIG. 10 is a flowchart illustrating an operating method of a base station according to embodiments;
FIG. 11 is a flowchart illustrating an operating method of a plurality of base stations and a terminal according to embodiments; and
FIG. 12 is a block diagram of a base station according to embodiments.

### DETAILED DESCRIPTION

Hereinafter, embodiments will be described in detail with reference to the accompanying drawings.

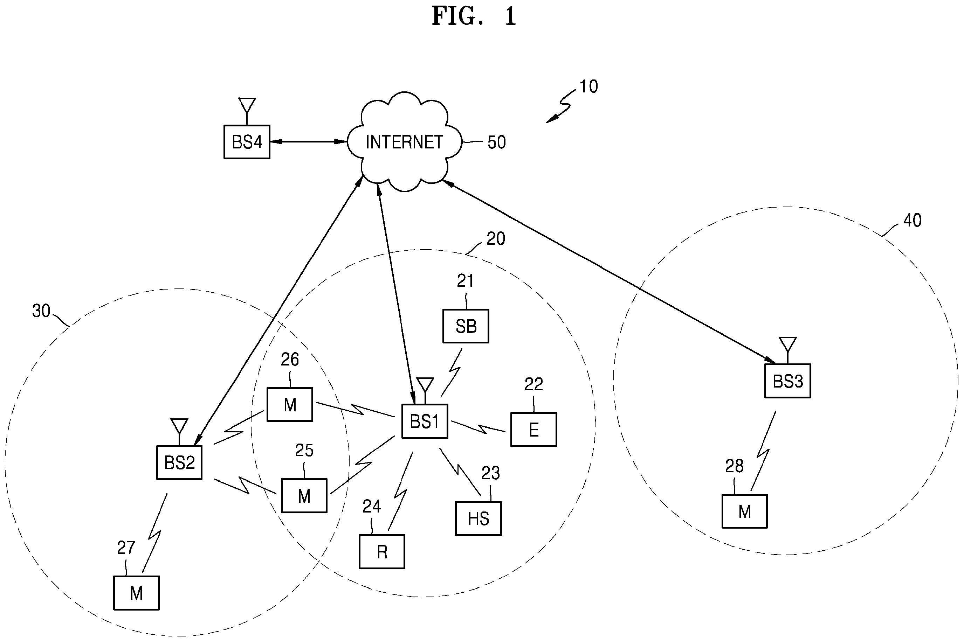

FIG. 1 is a diagram of a wireless communication system (WCS) 10 according to embodiments.

Referring to FIG. 1, the WCS 10 may include first to fourth base stations BS1, BS2, BS3, and B4. The fourth base station BS4 may communicate with the first to third base stations BS1, BS2, and BS3. The fourth base station BS4 may also communicate with at least one network 50 such as the Internet, a proprietary Internet protocol network, or another data network.

The first base station BS1 may provide wireless broadband access to a plurality of terminals 21 to 26 in a coverage area (cell) 20 thereof. The terminals 21 to 26 may include the terminal 21 that may be located in a small business SB, the terminal 22 that may be located in an enterprise E, the terminal 23 that may be located in a WiFi hotspot HS, the terminal 24 that may be located in a residence R, and terminals 26 that may correspond to a mobile device M such as a cellular phone, a wireless laptop, or a wireless personal digital assistant (PDA).

The second base station BS2 may provide wireless broadband access to the terminals 25 to 27 in a coverage area (cell) 30 thereof. The third base station BS3 may provide wireless broadband access to the terminal 28 in a coverage area (cell) 40 thereof. In embodiments, the first to fourth base stations BS1, BS2, BS3, and BS4 may communicate with one another or with the terminals 21 to 28 using new radio (NR), long-term evolution (LTE), LTE-advanced (LTE-A), WiMAX, WiFi, code division multiple access (CDMA), global system for mobile communications (GSM), a wireless local area network (WLAN), and/or any other wireless communication technologies. The terminals 27 and 28 may correspond to a mobile device M such as a cellular phone, a wireless laptop, or a wireless PDA.

Hereinafter, it is assumed that the first base station BS 1 supports dynamic spectrum sharing (DSS)-based communication between an NR network and an LTE network. It is also assumed that the first base station BS1 provides wireless communication service to the first terminal 25 located in the coverage area 20 thereof and the first terminal 25 is capable of performing NR network-based communication. The first base station BS1 may be referred to as a 'serving cell'.

DSS refers to technology in which one base station dynamically allocates NR and LTE frequency resources according to traffic usage in an LTE frequency band. For example, with regard to the first terminal 25 in the coverage area 20 of the first base station BS1 corresponding to the serving cell, when the first base station BS1 provides NR network service to the first terminal 25, the first base station BS1 (or the coverage area 20 of the first base station BS1) may be referred to as a 'serving NR cell', and when the first base station BS1 provides LTE network service to the first terminal 25, the first base station BS1 (or the coverage area 20 of the base station BS1) may be referred to as a 'serving LTE cell'.

Hereinafter, it is assumed that the second and third base stations BS2 and BS3 support LTE network-based communication. The coverage area 30 of the second base station BS2 or the coverage area 40 of the third base station BS3 may be referred to as a neighboring cell (or a neighboring LTE cell).

The above assumptions are intended to assist the understanding of the inventive concepts, but the inventive concepts are not limited thereto.

The first base station BS1 may transmit a physical downlink control channel (PDCCH) including scheduling information regarding data transmitted through a downlink channel to the first terminal 25. The first terminal 25 may perform NR network-based communication with the first base station BS1 based on the PDCCH.

The first base station BS1 may transmit information (hereinafter, referred to as CRS location information) about locations of resource elements (REs) allocated to the CRS transmitted by the serving LTE cell to the first terminal 25, and, when transmitting an NR PDSCH to the first terminal 25, perform rate matching. In other words, when the first base station BS1 and the first terminal 25 that receives NR from the first base station BS1 may in advance promise (or arrange) to perform rate matching on REs allocated to the CRS transmitted by the serving LTE cell when the first base station BS1 transmits the NR PDSCH to the first terminal 25.

The first base station BS1 according to embodiments may transmit information (hereinafter, referred to as CRS location information) about locations of REs used for a CRS transmitted by the second base station BS2 (or a neighboring LTE cell) to the first terminal 25. The first base station BS1 may perform rate matching based on the CRS location information received when transmitting the NR PDSCH to the first terminal 25. In the same frequency band (or similar frequency bands), when frequency shift parameter values (e.g., v_shift values) of the CRSs transmitted by the serving LTE cell and the neighboring LTE cell are different from each other, the CRS received from the neighboring LTE cell when the first terminal 25 receives the NR PDSCH from the first base station BS1 that is the serving cell may act as interference. Here, this may be applied even when the first terminal 25 receives CRSs from a single neighboring LTE cell (e.g., the second base station BS2) as well as a plurality of neighboring LTE cells (e.g., the second base station BS2 and the third base station BS3). Hereinafter, the CRS transmitted by the neighboring LTE cell BS2 may be referred to as an 'interference CRS'.

In addition, the first base station BS1 according to embodiments may transmit CRS location information received from at least one neighboring LTE cell to the first terminal 25, and may set a CRS rate matching pattern with respect to the at least one neighboring LTE cell. The first base station BS1 may determine whether to perform rate matching based on the CRS location information received when transmitting the NR PDSCH to the first terminal 25 with respect to each of the at least one neighboring LTE cell. For example, the first base station BS1 may recognize interference intensity of the neighboring LTE cell BS2 by utilizing inter-radio access technology (RAT) measurement information about heterogeneous networks measured by the first terminal 25, and may dynamically control activation or deactivation of the CRS rate matching pattern with respect to the at least one neighboring LTE cell according to the interference intensity. The first base station BS1 may dynamically determine whether to activate or deactivate rate matching at a location(s) of RE(s) used for each CRS, thereby optimizing or improving the NR data reception performance of a terminal due to (e.g., with respect to) the interference CRS.

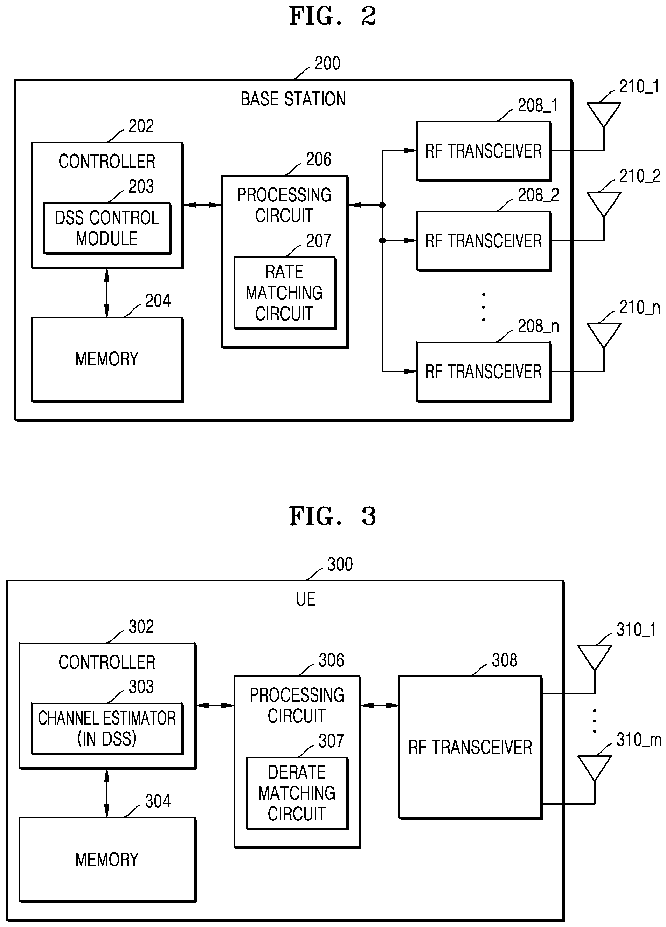

FIG. 2 is a block diagram of an implementation of a base station 200 according to embodiments. An implementation of the base station 200 is merely an example, and thus, the inventive concepts are not limited thereto. The implementation of the base station 200 may be applied to the first base station BS1 in FIG. 1.

Referring to FIG. 2, the base station 200 may include a controller 202, a memory 204, a processing circuit 206, a plurality of radio frequency (RF) transceivers 208 1 to 208_n, and/or a plurality of antennas 210_1 to 210 n.

According to embodiments, the controller 202 may perform general communication control operations of the base station 200 for DSS-based communication between an NR network and an LTE network, and may include a DSS control module 203 for resource allocation of an NR PDCCH in a DSS environment.

In embodiments, the DSS control module 203 may determine whether to map NR PDSCH REs allocated to transmit a data signal to a terminal (e.g., the first terminal 25 in FIG. 1), at locations of REs on a time-frequency domain allocated for an interference CRS transmitted by a neighboring LTE cell (e.g., the second base station BS2 in FIG. 1). Operations of NR PDSCH transmission/reception of the base station 200 and the terminal (e.g., the first terminal 25 in FIG. 1) may be different according to the determination regarding whether to map NR PDSCH Res.

For example, when the base station 200 maps NR PDSCH REs allocated to transmit the data signal to the terminal (e.g., the first terminal 25 in FIG. 1) to locations of REs on the time-frequency domain allocated for the interference CRS, the first terminal 25 (FIG. 1) may perform an interference cancellation operation of the interference CRS to receive an NR PDSCH. In this case, the first terminal 25 (FIG. 1) may perform channel estimation and additional interference cancellation operations on the interference CRS, and thus, the implementation complexity of the first terminal 25 (FIG. 1) may increase. In order to increase the interference cancellation effect of the interference CRS, an amount of information (e.g., a physical cell identifier (PCID) of a neighboring LTE cell, the number of CRS antenna ports, multimedia broadcast single frequency network (MBSFN) information, etc.) that the base station 200 provides to the first terminal 25 (FIG. 1) may be increased.

As another example, when the base station 200 does not map NR PDSCH REs allocated to transmit the data signal to the terminal (e.g., the first terminal 25 in FIG. 1) to the locations of REs on the time-frequency domain allocated for the interference CRS, the base station 200 may perform rate matching on the NR PDSCH at location(s) of RE(s) on the time-frequency domain allocated to the interference CRS and transmit the NR PDSCH to the first terminal 25 (FIG. 1). Accordingly, the base station 200 may reduce degradation of the NR PDSCH reception performance due to the interference of the neighboring LTE cell without increasing the implementation complexity of the first terminal 25 (FIG. 1).

The controller 202 may execute a program and/or a process stored in the memory 204 to perform general communication control operations of the base station 200. In embodiments, the DSS control module 203 may be stored in the memory 204 in the form of program code, and the controller 202 may perform the operations of the DSS control module 203 by accessing the memory 204 and executing the stored program code.

The processing circuit 206 may receive data signals from the controller 202 and encode, multiplex, and/or analogize the received data signals. According to embodiments, the processing circuit 206 may include a rate matching circuit 207. The rate matching circuit 207 may perform rate matching to match a bit rate of a physical layer PHY Layer after encoding the received data signal. For example, when it is determined by the DSS control module 203 that the base station 200 does not map NR PDSCH REs allocated to transmit the data signal to the terminal (e.g., the first terminal 25 in FIG. 1) to the locations of REs on the time-frequency domain allocated for the interference CRS, the base station 200 may perform rate matching on the NR PDSCH at location(s) of RE(s) on the time-frequency domain allocated to the interference CRS. Rate matching refers to a process of matching the number of bits of an encoded data signal to the maximum (or highest) transmission amount of a transmission channel by repeating or puncturing bits according to a set rate matching pattern. The processing circuit 206 may output channel-coded intermediate frequency (IF) signals or baseband signals through a procedure such as interleaving after rate matching.

The RF transceivers 208 1 to 208_n may frequency up-convert IF signals or baseband signals output from the processing circuit 206, and transmit the frequency up-converted IF signals or baseband signals to the antennas 210_1 to 210 n as RF signals. The RF transceivers 208 1 to 208 n may receive RF signals transmitted by terminals in a network from the antennas 210_1 to 210 n. The RF transceivers 208 1 to 208_n may frequency down-convert the received RF signals to generate IF signals or baseband signals.

FIG. 3 is a block diagram of an implementation of a user equipment (UE) 300 according to embodiments. The implementation of the UE 300 is merely an example, and the inventive concepts are not limited thereto. The implementation of the UE 300 may be applied to the first terminal 25 in FIG. 1.

Referring to FIG. 3, the UE 300 may include a controller 302, a memory 304, a processing circuit 306, an RF transceiver 308, and/or a plurality of antennas 310_1 to 310_m. Although not shown, the UE 300 may further include a component such as a speaker, an input/output interface, a touch screen, a display, etc.

The RF transceiver 308 may receive RF signals transmitted by a base station through the antennas 310 1 to 310 m. The RF transceiver 308 may down-convert received RF signals to generate IF signals or baseband signals. For example, the RF transceiver 308 may receive information including location(s) of RE(s) on a time-frequency domain allocated to an interference CRS received from the second base station BS2, which is a neighboring LTE cell from the first base station BS1. The RF transceiver 308 may receive, from the first base station BS1, an NR PDSCH on which rate matching is performed.

The processing circuit 306 may generate data signals by filtering, decoding, and/or digitizing IF signals or baseband signals. As an example, the processing circuit 306 may identify locations of REs on the time-frequency domain allocated to the interference CRS, based on the information (e.g., interference CRS location information) including location(s) of RE(s) on the time-frequency domain allocated to the interference CRS received through the RF transceiver 308. The processing circuit 306 may include a derate matching circuit 307. The derate matching circuit 307 may perform a derate matching operation of restoring the number of bits of an encoded data signal by repeating or puncturing bits before decoding.

According to embodiments, the controller 302 may perform general communication control operations for NR network-based or LTE network-based communication and may include a channel estimator 303 for downlink channel estimation in a DSS environment.

In embodiments, the channel estimator 303 may perform channel estimation on a CRS signal received by the second base station BS2 corresponding to the neighboring LTE cell.

The controller 302 may execute a program and/or a process stored in the memory 304 to perform general communication control operations of the UE 300. In embodiments, the channel estimator 303 may be stored in the memory 304 in the form of program code, and the controller 302 may perform the operation of the channel estimator 303 by accessing the memory 304 and executing the stored program code.

In addition, the processing circuit 306 may receive data signals from the controller 302. The processing circuit 306 may encode, multiplex, and/or analogize the received data signals. The RF transceiver 308 may frequency up-convert IF signals or baseband signals output from the processing circuit 306 and transmit the frequency up-converted IF signals or baseband signals to the antennas 310_1 to 310 n as RF signals.

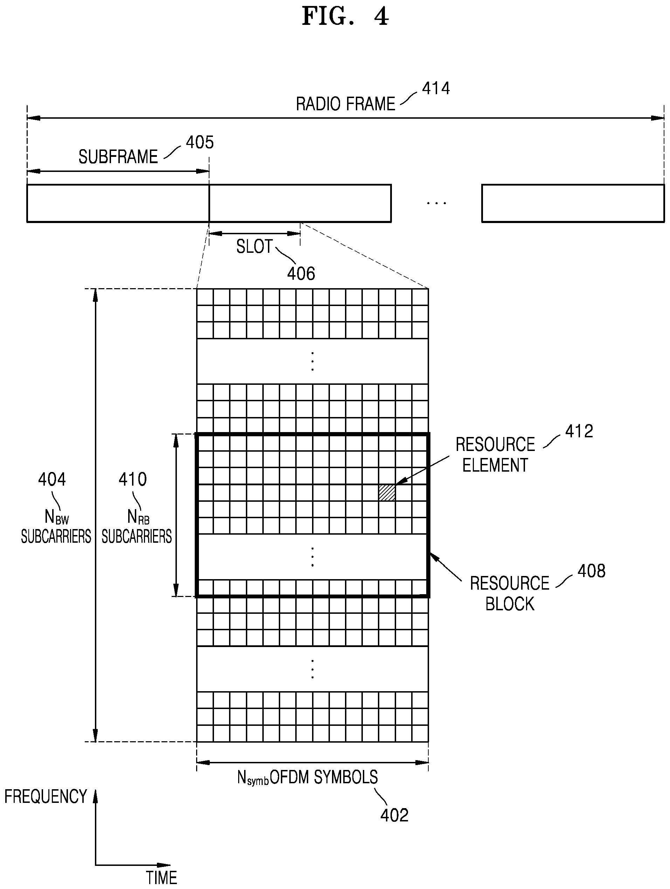

FIG. 4 is a diagram illustrating a basic structure of a time-frequency resource provided in the wireless communication system 10 of FIG. 1.

Referring to FIG. 4, the horizontal axis may indicate a time domain and the vertical axis may indicate a frequency domain. A minimum (or smallest) unit of a resource allocation in the time domain is an orthogonal frequency division multiplexing (OFDM) symbol, N_{symb} OFDM symbols 402 may constitute a single slot 406, and N (N is an integer equal to or greater than 1) slots may constitute a single subframe 405. In addition, a single radio frame 414 may correspond to a unit of the time domain including ten subframes 405. A minimum (or smallest) unit of a resource allocation in the frequency domain is a subcarrier, and a total bandwidth of a communication system may include N_{BW} subcarriers 404.

A basic unit of a resource in a time-frequency domain may be an RE 412 and may be represented by an OFDM symbol index and a subcarrier index. A resource block (RB) 408 may be defined as N_{symb} consecutive OFDM symbols 402 in the time domain and N_{RB} consecutive subcarriers 410 in the frequency domain. Accordingly, one RB 408 may include N_{symb}∗N_{RB} REs 412.

As a plurality of numerologies is supported in NR network-based communication, subcarrier spacing (SCS) and a length of the slot 406 vary, and the number of slots constituting one subframe 405 of 1 ms may be determined by the numerology of the wireless communication system 10. For example, referring to FIG. 4, the length of the slot 406 may be 0.5 ms, 2 (N is 2) slots may constitute the single subframe 405, and the single slot 406 may include 14 (N_{symb}=14) OFDM symbols. This is merely an example, and the inventive concepts are not limited thereto and this may be applied to a wireless communication system supporting other numerology.

In addition, a downlink channel including a PDCCH, a physical downlink shared channel (PDSCH), etc. may be transmitted from a base station to a terminal in a wireless communication system through time-frequency resources as shown in FIG. 4.

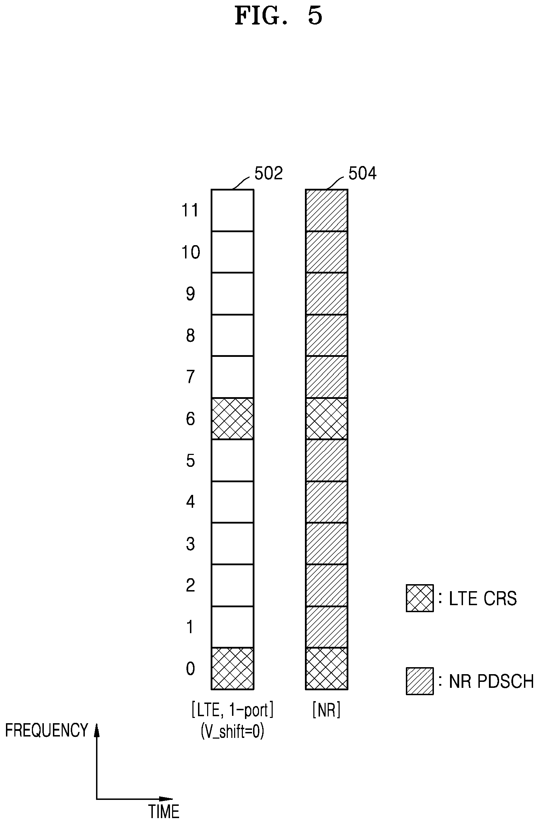

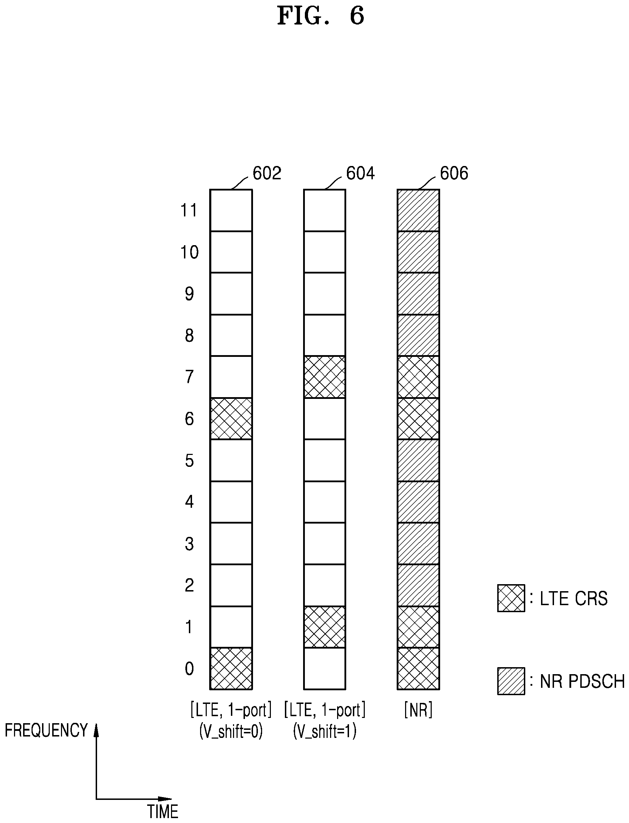

FIGS. 5 and 6 illustrate embodiments of a rate matching pattern of a CRS in a DSS environment between NR and LTE networks.

FIGS. 5 and 6 illustrate 12 REs 0 to 11 arranged in a frequency axis. The 12 REs 0 to 11 may be included in a time-frequency domain overlapping in the NR network and the LTE network.

FIG. 5 illustrates a pattern 502 of a CRS transmitted by a serving LTE cell and a rate matching pattern 504 of a CRS received by a terminal in one antenna port. FIG. 6 illustrates patterns 602 and 604 of CRSs transmitted by the serving LTE cell and a neighboring LTE cell and a rate matching pattern 606 of the CRS received by the terminal in one antenna port. The number of antenna ports of the CRS may have a value (e.g., 2 to 4) other than 1, but is not limited thereto.

A CRS pattern refers to REs allocated to a CRS existing in a repetitive form in a time-frequency resource. For example, two CRSs with a constant offset per CRS antenna port may be allocated to one symbol in one RB. The offset may be equally applied to all symbols, and accordingly, the CRS may form a constant pattern. A CRS rate matching pattern refers to PDSCH REs on which rate matching is performed, configured assuming that a PDSCH is mapped to the remaining REs other than REs allocated to the CRS. According to the 3rd Generation Partnership Project (3GPP) standard, 'RateMatchingpatternLTE-CRS', which is an information element (IE) signaled via a remote radio control (RRC) message, means (or indicates) information about the CRS rate matching pattern. As the CRS forms a constant pattern, PDSCH REs on which rate matching is performed may also form a constant pattern in the time-frequency domain.

A 'serving NR cell' may correspond to the first base station BS1 providing an NR network service in FIG. 1, a 'serving LTE cell' may correspond to the first base station BS1 providing an LTE network service in FIG. 1, and a 'neighboring LTE cell' may correspond to the 'second base station BS2' or the 'third base station BS3' in FIG. 1.

Referring to FIG. 5 that illustrates the pattern 502 of the CRS transmitted by the serving LTE cell in one antenna port, when a v shift value (expressed as a modular 6 of a cell ID) of the CRS transmitted by the serving LTE cell is '0', 0^{th} and 6^{th} REs may be allocated to the CRS in the LTE network. As an example, in the NR network, 0^{th} and 12^{th} REs may be scheduled to be allocated to the NR PDSCH. At this time, a base station (e.g., the first base station BS1 in FIG. 1) according to embodiments may transmit information about locations of the REs allocated to the above-described CRS (hereinafter referred to as CRS location information) to a terminal (e.g., the first terminal 25 of FIG. 1). The CRS location information may include information about a rate matching pattern of the CRS. For example, when transmitting a PDSCH to the first terminal 25, the first base station BS1 may perform rate matching on the PDSCH based on the CRS location information. That is, the first base station BS1 may not map the PDSCH to the location of the CRS pattern and may leave the location empty, and may allocate the RE to the CRS other than the NR PDSCH at the location of the CRS pattern.

Referring to FIG. 6 that illustrates the patterns 602 and 604 of CRSs transmitted by the serving LTE cell and the neighboring LTE cell in one antenna port, when the v shift value (expressed as the modular 6 of the cell ID) of the CRS transmitted by the serving LTE cell is '0', the 0^{th} and 6^{th} REs may be allocated to the CRS. When a v shift value (expressed as the modular 6 of the cell ID) of the CRS transmitted by the neighboring LTE cell is '1', first and 7^{th} REs may be allocated to the CRS. CRSs transmitted by neighboring LTE cells having different v shift values may act as interferences when the terminal receives the NR PDSCH. As an example, the 0^{th} and 12^{th} REs may be scheduled to be allocated to the NR PDSCH in the NR network. At this time, the base station (e.g., the first base station BS1 in FIG. 1) according to embodiments may transmit not only the information about locations of REs allocated to the CRS transmitted by the serving LTE cell, but also the information about locations of REs allocated to the CRS transmitted by the neighboring LTE cell to the terminal (e.g., the first terminal 25 of FIG. 1). For example, when transmitting the PDSCH to the first terminal 25, the first base station BS1 may perform rate matching on the PDSCH based on the location information of the REs allocated to the CRS transmitted by the neighboring LTE cell. That is, the first base station BS1 may not map the PDSCH to the location of the CRS pattern and may leave the location empty, and may allocate the RE to the CRS other than the NR PDSCH at locations of the first and 7^{th} REs.

According to an operating method of the base station according to embodiments, information about CRSs of neighboring LTE cells is additionally provided to a terminal (e.g., the first terminal 25 of FIG. 1) operating in a DSS environment, and thus, degradation of the reception quality of the terminal due to the interference of neighboring LTE cells may be mitigated.

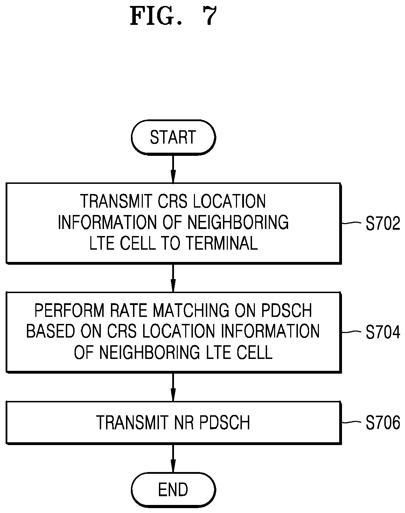

FIG. 7 is a flowchart illustrating an operating method of a base station according to embodiments. The operating method of the base station may be applied to the first base station BS1 of FIG. 1.

In S702, the base station may transmit CRS location information of a neighboring LTE cell to a terminal. The CRS location information may include information about locations of REs allocated to a CRS transmitted by the neighboring LTE cell, and/or information about a rate matching pattern of the CRS transmitted by the neighboring LTE cell.

In embodiments, the neighboring LTE cell may include two or more pieces of CRS location information. According to the 3GPP standard Release-16, in order to effectively manage the influence of interference due to CRS transmission, when multi-downlink control information (DCI)-based multi-transmission reception point (TRP) transmission is set, it is standardized to support up to two CRS rate matching patterns in a specific frequency domain to a wireless communication system in a DSS environment. In particular, according to the 3GPP standard document 38.214 of the 3GPP standard Release-16, the multi-TRP is restricted to up to two TRPs (e.g., base stations), and does not define three or more multi-TRPs. Because one CRS rate matching pattern may correspond to one LTE cell, for example, the terminal may receive a first CRS rate matching pattern of a first neighboring LTE cell and a second CRS rate matching pattern of a second neighboring LTE cell. According to embodiments, in such a scenario restriction of supporting up to two CRS rate matching patterns only during the multi-DCI-based multi-TRP transmission is released, and thus, N (N is a positive integer) CRS rate matching patterns may be applied, and two CRS rate matching patterns may be applied even during single-TRP transmission. N refers to the number of serving cells and neighboring LTE cells, and because one CRS rate matching pattern may correspond to one LTE cell, N may also refer to the number of CRS rate matching patterns. Assuming that the number of CRS antenna ports of each of the N LTE cells is 1, according to the resource allocation standard of a CRS including offsets of REs allocated to the CRS, N may be up to 6. Accordingly, the maximum (or highest) number of CRS rate matching patterns that may be supported in a specific frequency domain may be determined according to the number of CRS antenna ports of each of the serving cell and the neighboring LTE cells.

For example, that three CRS rate matching patterns may be applied even during the single-TRP transmission may be additionally defined in the 3GPP standard document 38.214 as shown in Table 1 below.

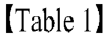

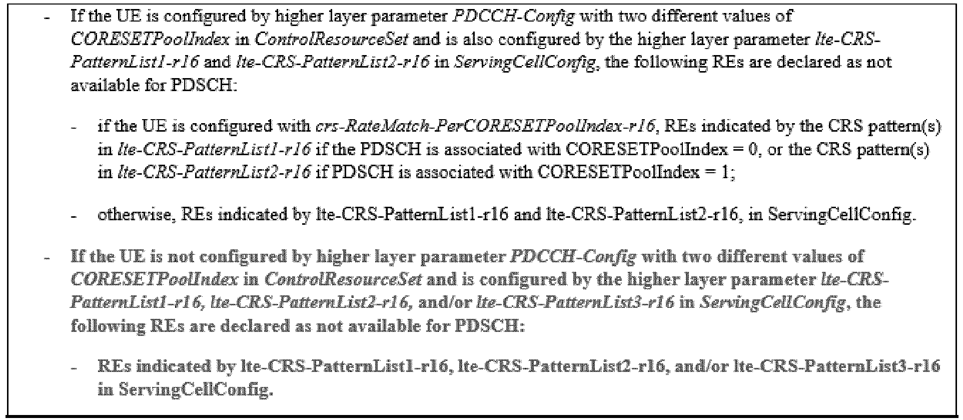

Referring to Table 1, it is defined that when the multi-TRP transmission is not configured, and three CRS pattern lists are configured, the REs are indicated by three CRS pattern lists included in 'ServingCellConfig', which is an IE.

According to the 3GPP standard, the base station may transmit an RRC message including 'ServingCellConfig' to the terminal through higher layer signaling. For example, when the base station transmits information about the CRS rate matching pattern of three LTE cells to the terminal (e.g., when N=3), the RRC message may be defined as shown in Table 2 below.

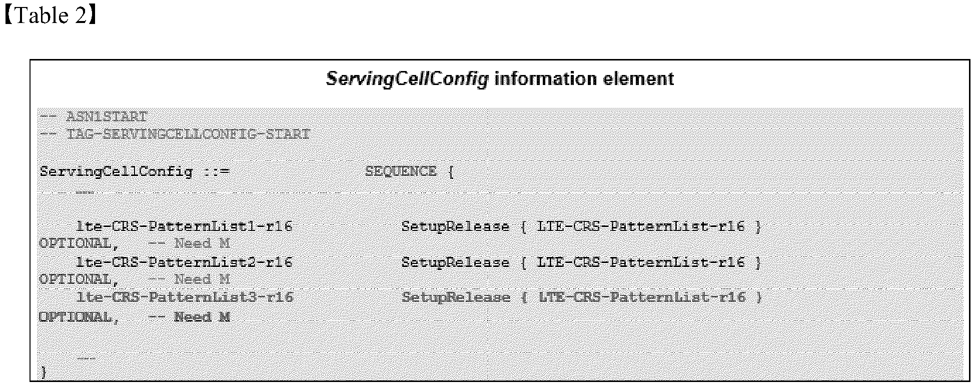

Referring to Table 2, the base station may transmit information about three CRS pattern lists (LTE-CRS-PatternList1-r16, LTE-CRS-PatternList2-r16, LTE-CRS-PatternList3-r16) to the terminal. Unlike the e3GPP standard Release-16, where only LTE-CRS-PatternList1-r16 and LTE-CRS-PatternList2-r16 are defined, according to embodiments, three or more TRPs (or three or more LTE cells) may support three different CRS rate matching patterns in the same frequency band (or similar frequency bands). According to embodiments, from the viewpoint of the terminal receiving an NR PDSCH, because an NR frequency band may be greater than an LTE frequency band, each CRS pattern list may include up to three non-overlapping frequency bands. Accordingly, the terminal may receive support up to 9 CRS rate matching patterns when N=3. For example, up to 6 CRS pattern lists may be defined, and the terminal may receive support up to 18 CRS rate matching patterns.

According to the 3GPP standard document TS 38.331, an IE including the information about the CRS rate matching pattern is defined as an RRC message as shown in Table 3 below.

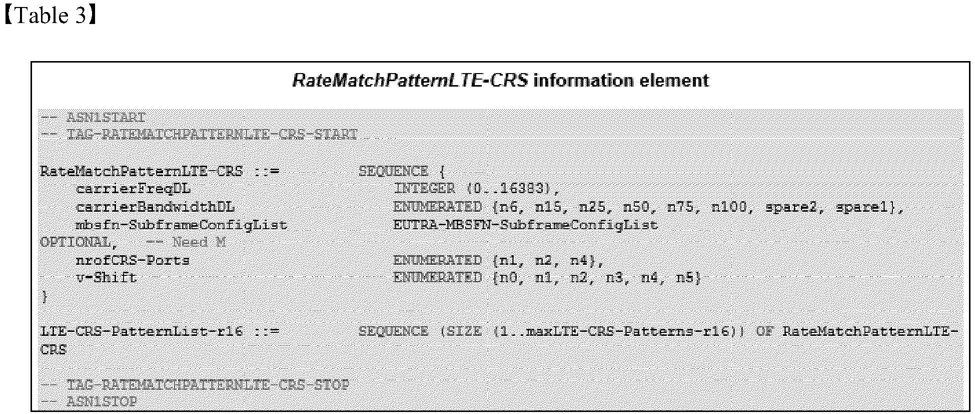

Referring to Table 3, the base station (e.g., the first base station BS 1 in FIG. 1) may transmit, to the terminal (e.g., the first terminal 25 in FIG. 1), an LTE bandwidth, a location of an LTE center frequency, the number of CRS ports, a frequency shift parameter v_shift value, and MBSFN setting information. That is, the base station may transmit information (hereinafter, referred to as CRS location information) about locations of REs allocated to the CRS to the terminal through higher layer signaling. The v_shift value means a frequency shift parameter value, is an offset value with respect to an RE on the frequency axis, and may be equally applied to all symbols.

In S704, the base station may perform rate matching on a PDSCH based on the CRS location information of the neighboring LTE cell. The base station may perform rate matching by transmitting the information about the rate matching pattern of the CRS (e.g., the rate matching pattern of the CRS included in Table 3) to the terminal and accurately identifying a location to which the RE of the CRS transmitted by the neighboring LTE cell is mapped.

In embodiments, the neighboring LTE cell may be a plurality of neighboring LTE cells, and the base station may perform rate matching on each NR PDSCH based on the CRS location information corresponding to each neighboring LTE cell.

In S706, the base station may transmit the NR PDSCH on which rate matching is performed to the terminal. The terminal may determine which CRS pattern is considered for the base station to perform rate matching on and transmit the NR PDSCH in order to correctly demodulate the PDSCH. Therefore, the base station according to embodiments may perform rate matching on the PDSCH based on information about the CRS rate matching pattern of the neighboring LTE cell, and the terminal receiving the PDSCH may demodulate the PDSCH based on the information about the CRS rate matching pattern received from the base station.

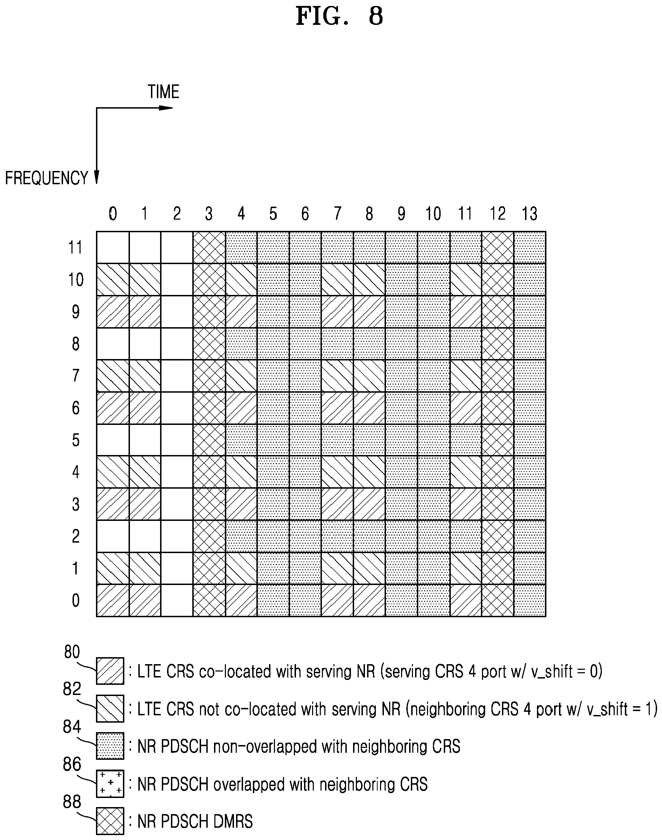

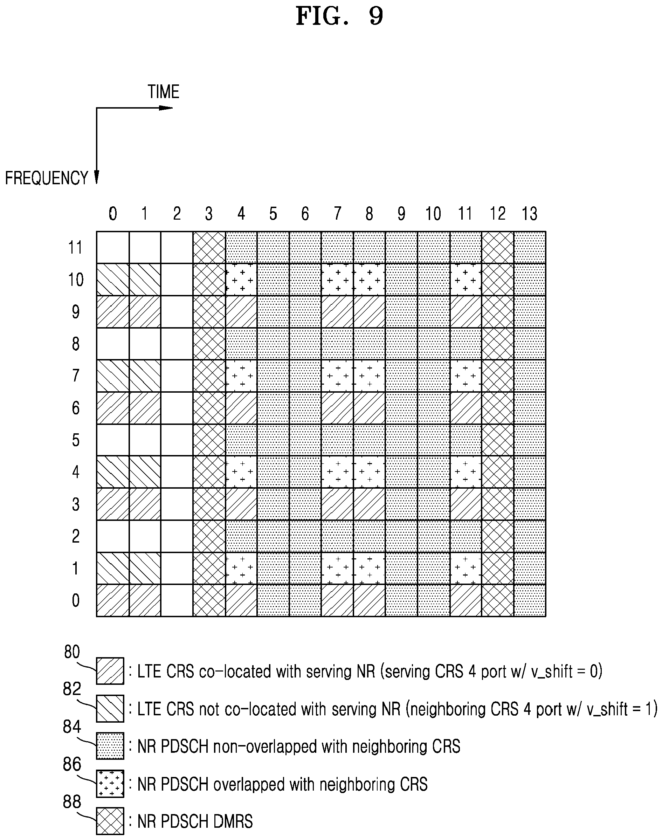

FIGS. 8 and 9 illustrate an example of a structure of an RB according to activation/deactivation of a CRS rate matching pattern according to embodiments. Hereinafter, for convenience of description, FIGS. 8 and 9 are described with reference to FIG. 1.

FIGS. 8 and 9 illustrate one RB including 14 symbols indexed from 0 to 13 and 12 subcarriers from 0 to 11 in each symbol. For convenience of description, an RE in one RB shown in FIGS. 8 and 9 may be represented by (symbol index, a subcarrier index), and, for example, one of REs allocated to an NR PDSCH demodulation reference signal (DMRS) may be represented by (3, 11).

The first base station BS1 supporting a DSS between NR and LTE networks according to embodiments may set a CRS rate matching pattern of a neighboring LTE cell. As described above with reference to FIGS. 5 and 6, the first base station BS1 may transmit information about the CRS rate matching pattern of the neighboring LTE cell to the first terminal 25, and perform rate matching on a PDSCH based on the information about the CRS rate matching pattern when transmitting an NR PDSCH to the first terminal 25.

According to the operating method of the base station according to embodiments of FIG. 7, the first base station BS1 may always perform rate matching on CRS rate matching patterns of all set neighboring LTE cells. In addition, when the first base station BS1 performs rate matching on the NR PDSCH based on the CRS rate matching pattern of the neighboring LTE cell, interference of the first terminal 25 receiving the NR PDSCH may be mitigated, and thus, reception performance thereof may be improved, and a code rate may be increased. The code rate is a value obtained by dividing the number of bits to be transmitted by the total number of bits including bits added for channel coding. Accordingly, the closer the code rate is to 1, the smaller the proportion of overhead made for decoding and the longer the length of data bits to be transmitted, which may result in an efficient transmission. When the first base station BS1 maps NR PDSCH resources to locations of REs allocated to the CRS without performing rate matching on the NR PDSCH based on the CRS rate matching pattern of the neighboring LTE cell, the interference of the first terminal 25 may be increased, which may degrade reception performance thereof, and the code rate may be reduced.

Accordingly, the first base station BS1 according to embodiments may dynamically control whether to perform rate matching on the CRS of the neighboring LTE cell according to a situation of the first terminal 25. That is, with respect to the CRS rate matching pattern of the neighboring LTE cell set by the first base station BS1, the first base station BS1 may or may not perform rate matching on the PDSCH according to the situation of the terminal. In addition, there may be a plurality of neighboring LTE cells, and the inventive concepts are not limited thereto.

The situation of the first terminal 25 that is a reference for determining whether to perform rate matching may be determined by the magnitude of interference due to an interference CRS measured by the first terminal 25 through a distance from the first base station BS1 to the first terminal 25, reference signal received power (RSRP), signal to interference noise ratio (SINR), received signal strength index (RSSI), and/or received signal received quality (RSRQ) values measured by the first terminal 25 with respect to the interference CRS, etc. For example, the first base station BS1 may utilize inter-RAT measurement information corresponding to the measurement of a heterogeneous network with respect to a cell to measure the magnitude of interference due to CRS transmission of the second base station BS2 corresponding to the neighboring LTE cell.

For example, when the first terminal 25 is in the center of the coverage area (or cell) 20 of the first base station BS1, the magnitude of interference due to the interference CRS transmitted by the second base station BS2 corresponding to the neighboring LTE cell may have a relatively small value in the first terminal 25. When the first terminal 25 is at an edge of the coverage area (or cell) 20 of the first base station BS1, the magnitude of interference due to the interference CRS transmitted by the second base station BS2 corresponding to the neighboring LTE cell may have a relatively large value in the first terminal 25. Therefore, considering the situation of the first terminal 25, in the former case, the CRS rate matching pattern may be deactivated, and in the latter case, the CRS rate matching pattern may be activated.

Hereinafter, in a wireless communication system supporting DSS-based communication between an NR network and an LTE network, it is assumed that the first base station BS1 performs NR network-based communication with the first terminal 25, and the second base station BS2 supports LTE network-based communication. According to embodiments, the first base station BS1 supporting the LTE network in the DSS environment may transmit a first CRS in which the v_shift value is set to 0 using four antenna ports, and may correspond to a serving LTE cell that is co-located with a serving NR cell. In addition, the second base station BS2 supporting the LTE network in the DSS environment may transmit a second CRS in which the v_shift value is set to 1 using four antenna ports, and may correspond to a neighboring LTE cell that is not co-located with the serving NR cell. The second CRS may be referred to as an 'interference CRS'.

FIG. 8 illustrates the RB when the base station performs rate matching on the CRS rate matching pattern of the neighboring LTE cell according to embodiments, and FIG. 9 illustrates the RB when the base station does not perform rate matching on the CRS rate matching pattern of the neighboring LTE cell according to embodiments.

Specifically, FIGS. 8 and 9 illustrate REs 80 allocated to the CRS of the serving LTE cell, REs 82 allocated to the CRS of the neighboring LTE cell, NR PDSCH REs 84 allocated to a location not overlapped with the CRS pattern of the neighboring LTE cell, and NR PDSCH REs 86 allocated to a location overlapped with the CRS pattern of the neighboring LTE cell. Res 88 may be allocated to the NR PDSCH DMRS.

For example, according to FIG. 8, when the first base station BS1 performs rate matching based on a second CRS rate matching pattern of the second CRS transmitted by the second base station BS2, the first base station BS1 may allocate REs for the second CRS to locations such as (0, 1), (1,1), (4,1), (7,1), (8,1), (11,1), etc. corresponding to second CRS patterns without mapping NR PDSCH resources thereto. For example, the REs 82 allocated to the CRS of the neighboring LTE cell may be located at (4,1), (7,1), (8,1), and (11,1) corresponding to some of the second CRS patterns in FIG. 8.

According to FIG. 9, when the first base station BS1 does not perform rate matching based on the second CRS rate matching pattern of the second CRS transmitted by the second base station BS2, the first base station BS1 may map the NR PDSCH resources to the locations such as (0, 1), (1,1), (4,1), (7,1), (8,1), (11,1), etc. corresponding to the second CRS patterns without allocating REs for the second CRS thereto. For example, the NR PDSCH REs 86 allocated to the location overlapped with the CRS pattern may be located at (4,1), (7,1), (8,1), and (11,1) corresponding to some of the second CRS patterns in FIG. 9.

Referring to FIGS. 8 and 9, rate matching is always performed based on the CRS rate matching pattern with respect to the first CRS transmitted by the serving LTE cell co-located with the serving NR cell. For example, the REs 80 allocated to the CRS of the serving LTE cell may be located at (4,0), (7,0), (8,0), and (11,0) corresponding to first CRS patterns in FIGS. 8 and 9.

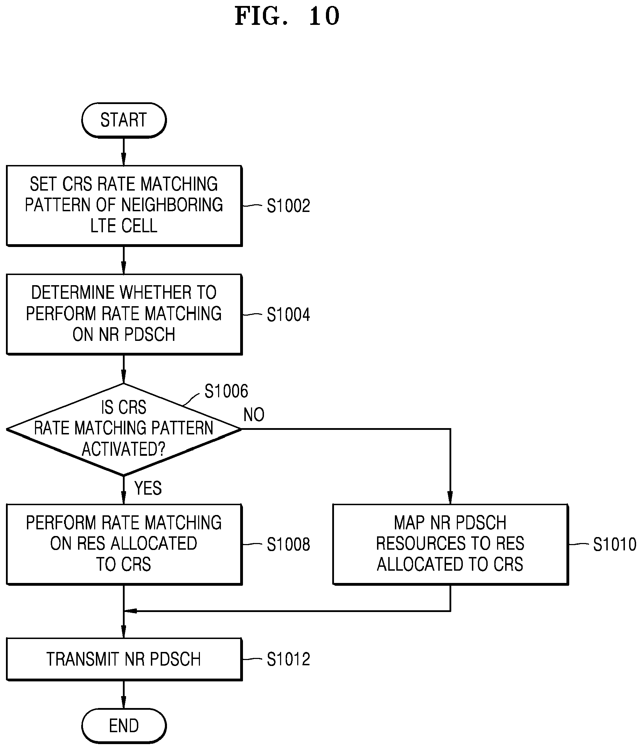

FIG. 10 is a flowchart illustrating an operating method of a base station according to embodiments. The operating method of the base station may be applied to the first base station BS1 of FIG. 1.

In S1002, the base station may set a CRS rate matching pattern of a neighboring LTE cell.

In S1004, the base station may determine whether to perform rate matching on an NR PDSCH based on the CRS rate matching pattern of the neighboring LTE cell.

In S1006, the base station may determine whether to activate the CRS rate matching pattern according to the magnitude of interference due to a CRS measured by a terminal.

When the CRS rate matching pattern is to be activated, in S1008, the base station may perform rate matching on REs allocated to the CRS of the neighboring LTE cell.

When the CRS rate matching pattern is to be deactivated, in S1010, the base station may map NR PDSCH resources to a location of the CRS pattern (e.g. the CRS pattern of the neighboring LTE cell), without allocating REs for the CRS thereto, with respect to the CRS transmitted by the neighboring LTE cell.

For example, the base station may activate or deactivate CRS rate matching patterns set by using a medium access control (MAC) control element (CE) method or a downlink control information (DCI) method. Also, the base station may transmit information about whether to perform activation to the terminal by using the MAC CE method or the DCI method. The MAC CE method is a method of transmitting the information about whether to perform activation to the terminal through an NR PDSCH different from the NR PDSCH transmitted by the base station in S1012, as described below. At this time, the terminal may receive the NR PDSCH that is different from the NR PDSCH transmitted by the base station (different from the NR PDSCH transmitted by the base station in S1012), and then provide a hybrid automatic repeat request (HARQ) ACK/NACK as feedback to the base station in response thereto. The information about whether to activate the CRS rate matching pattern received by the terminal by using the MAC CE method may be applied after X[ms] (X is a positive number) corresponding to a certain duration in a slot in which the HARQ ACK/NACK is transmitted. X[ms] may be a longer time than the slot, and, for example, X may be 3. Because the MAC CE method entails latency, the MAC CE method may be suitable when whether to activate the CRS rate matching pattern is maintained for a relatively long time. Because the DCI method includes the information about whether to activate the CRS rate matching pattern in a payload of DCI, activation or deactivation may be applied in units of slots and dynamically controlled relatively quickly.

As described above with reference to FIG. 7, from the viewpoint of the terminal receiving the NR PDSCH, because an NR frequency band may be greater than an LTE frequency band, each CRS pattern list (that is, each of N LTE cells) may include up to three non-overlapping frequency bands. In addition, up to 6 CRS pattern lists may be defined, and the terminal may support up to 18 CSR rate matching patterns. Accordingly, considering that up to 3 frequency bands may exist per LTE cell, the base station may transmit information about up to (3^{∗}N) CRS rate matching patterns, or information about whether to activate the CRS rate matching patterns, to the terminal. Considering restrictions in a general DCI size, when the base station according to embodiments uses the DCI method, the base station may determine whether to activate (3^{∗}N) rate matching patterns by using a code point method in a group unit. Specifically, the base station may define M (M is a positive integer) bits in the DCI and previously set a group of CRS rate matching patterns corresponding to each of a total of 2^{M} DCI code points through higher layer signaling.

For example, when M=2, 4 DCI code points (0, 1, 2, 3) may be configured using 2 bits, and DCI code point 1 may correspond to grouped CSR rate matching patterns and include a first CRS rate matching pattern and a third rate matching pattern.

When the terminal receives information including whether to activate a plurality of CRS rate matching patterns by using the DCI method, the base station may activate CRS rate matching patterns included in a group corresponding to the DCI code point to a PDSCH scheduled by the DCI. For example, whether to activate the first CRS rate matching pattern and the third rate matching pattern included in the DCI code point 1 as one group may be determined.

In S1012, the base station may transmit an NR PDSCH on which CRS rate matching is performed, or an NR PDSCH on which CRS rate matching is not performed, to the terminal.

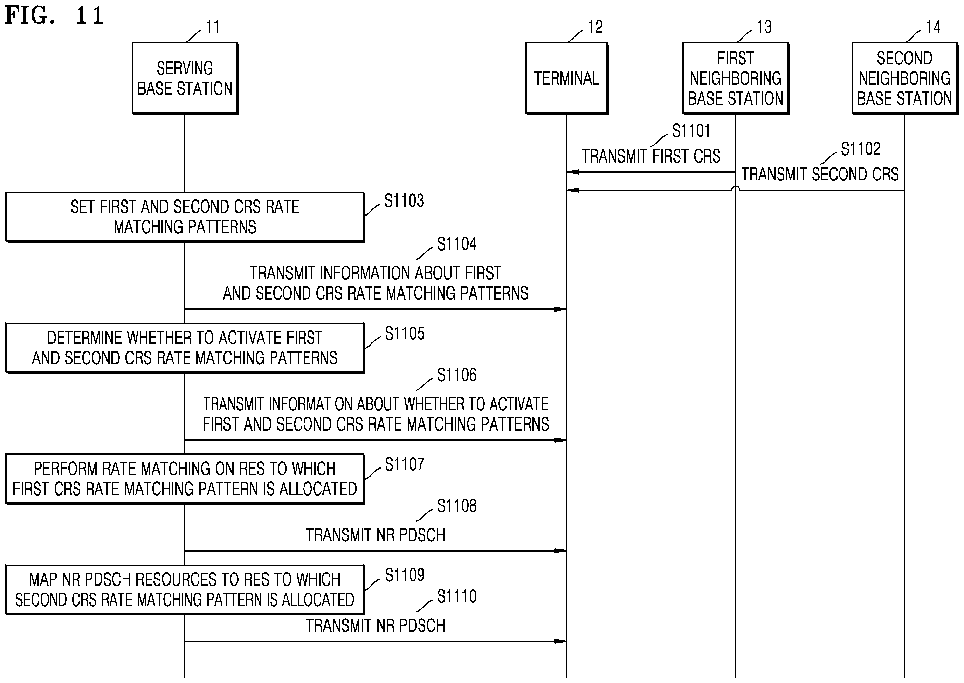

FIG. 11 is a flowchart illustrating an operating method of a plurality of base stations 11, 13, and 14 and a terminal 12 according to embodiments.

FIG. 11 illustrates operations between the serving base station 11, the terminal 12, the first neighboring base station 13, and the second neighboring base station 14. The serving base station 11 of FIG. 11 may correspond to the first base station BS1 of FIG. 1, the first neighboring base station 13 and the second neighboring base station 14 may respectively correspond to the second base station BS2 and the third base station BS3 of FIG. 1, and the terminal 12 of FIG. 11 may correspond to the first terminal 25 of FIG. 1. In addition, the operations of the serving base station 11 of FIG. 11 are similar to the operations of the base station shown in FIG. 10 except that a special case of two neighboring LTE cells is assumed. Descriptions redundant with those given above are omitted below.

The terminal 12 that performs NR network-based communication with the serving base station 11 may periodically receive a CRS signal from the first neighboring base station 13 and/or the second neighboring base station 14. For example, in S1101, the first neighboring base station 13 may transmit a first CRS to the terminal 12, and in S1102, the second neighboring base station 14 may transmit a second CRS to the terminal 12.

In S1103, the serving base station 11 may set first and second CRS rate matching patterns of the first neighboring base station 13 and the second neighboring base station 14 based on the first CRS and the second CRS, respectively.

In S1104, the serving base station 11 may transmit information about the first and second CRS rate matching patterns to the terminal 12. The information about the first and second CRS rate matching patterns may include an LTE bandwidth, a location of a center frequency, the number of antenna ports of the CRS, a frequency shift parameter value, MBSFN setting information, etc. with respect to each of the first neighboring base station 13 and the second neighboring base station 14.

In S1105, the serving base station 11 may determine whether to activate the first and/or second CRS rate matching patterns. Whether to activate the CRS rate matching pattern may be determined by magnitudes of interferences due to the first and second CRSs measured by the terminal 12 through a distance from the serving base station 11 to the terminal 12, RSRP, SINR, RSSI, and/or RSRQ values, which are parameters measured by the terminal 12 with respect to the first and second CRSs. According to embodiments, the serving base station 11 may separately determine whether the activate the first CRS rate matching pattern and/or the second CRS rate matching patterns based on the respective magnitudes of interference.

In S1106, the serving base station 11 may transmit information about whether to activate the first and/or second CRS rate matching patterns to the terminal 12. According to embodiments, the serving base station 11 may transmit the information about whether to activate the first and/or second CRS rate matching patterns to the terminal 12, by using a MAC CE method or a DCI method.

In S1107, when the first CRS rate matching pattern is activated in any first slot, the serving base station 11 may perform rate matching on REs to which the first CRS rate matching pattern is allocated.

In S1108, the serving base station 11 may transmit an NR PDSCH on which rate matching is performed to the terminal 12. Accordingly, when the terminal 12 receives NR data, the degradation of the reception performance of the terminal 12 due to the interference by the first CRS of the first neighboring base station 13 may be mitigated.

In S1109, when the second CRS rate matching pattern is deactivated in any second slot, the serving base station 11 may map NR PDSCH resources to REs to which the second CRS rate matching pattern is allocated. In S1110, the serving base station 11 may transmit an NR PDSCH on which rate matching is not performed to the terminal 12.

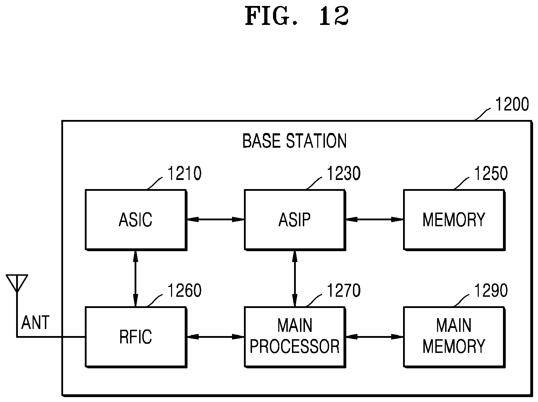

FIG. 12 is a block diagram of a base station 1200 according to embodiments.

Referring to FIG. 12, the base station 1200 may include a modem (not shown) and a radio frequency integrated circuit (RFIC) 1260. The modem may include an application specific IC (ASIC) 1210, an application specific instruction set processor (ASIP) 1230, a memory 1250, a main processor 1270, and/or a main memory 1290. The base station 1200 of FIG. 12 may correspond to the first base station BS1 according to embodiments.

The RFIC 1260 may be connected to an antenna Ant, and may receive an external signal or transmit a signal to the outside using a wireless communication network. The RFIC 1260 may include the rate matching circuit 207 described with reference to FIG. 2. According to the inventive concepts, the RFIC 1260 may perform CRS rate matching on CRSs transmitted by neighboring LTE cells when transmitting data to a terminal. In embodiments, the RFIC 1260 may map an NR PDSCH resource to a location of a CRS pattern without performing CRS rate matching on the CRSs transmitted by neighboring LTE cells.

As an IC customized to a particular use, the ASIP 1230 may support an instruction set dedicated to a particular application and execute instructions included in the instruction set. The memory 1250 may communicate with the ASIP 1230 and store, as a non-transitory storage device, a plurality of instructions executed by the ASIP 1230. As a non-limiting example, the memory 1250 may include any type of memory, such as random access memory (RAM), read-only memory (ROM), tape, a magnetic disk, an optical disk, volatile memory, non-volatile memory, or a combination thereof, which is accessible by the ASIP 1230.

The main processor 1270 may control the base station 1200 by executing the instructions. For example, the main processor 1270 may control the ASIC 1210 and the ASIP 1230, and process data received through a wireless communication network. The main memory 1290 may communicate with the main processor 1270 and store, as a non-transitory storage device, a plurality of instructions executed by the main processor 1270. As a non-limiting example, the main memory 1290 may include any type of memory, such as RAM, ROM, tape, a magnetic disk, an optical disk, volatile memory, non-volatile memory, or a combination thereof, which is accessible by the main processor 1270.

Conventional base stations in dynamic spectrum sharing (DSS) environments transmit data in new radio (NR) physical downlink shared channel (PDSCH) resource elements that overlap long-term evolution (LTE) cell reference signals (CRSs) of neighboring base stations. Accordingly, these conventional base stations experience signal interference from the CRSs of the neighboring base stations that degrades NR data reception performance. Also, terminals attempting to receive the degraded data signal on the NR PDSCH from the conventional base stations perform additional interference cancellation operations involving higher implementation complexity (additional equipment, resource consumption, processing, signaling, etc.).

However, according to embodiments, improved base stations for operating in DSS environments are provided. For example, the improved base stations perform rate dematching based on the locations of the resource elements of the LTE CRSs of neighboring base stations. Accordingly, the improved base stations transmit data in NR PDSCH resource elements that do not overlap the LTR CRSs, thereby avoiding or reducing the signal interference experienced by the conventional base stations. Therefore, the improved base stations overcome the deficiencies of the conventional base stations to improve NR data reception performance. Also, terminals are able to receive the data signal on the NR PDSCH from the improved base stations without the additional interference cancellation operations, and the additional implementation complexity, involved in receiving such a data signal from the conventional base stations.

According to embodiments, operations described herein as being performed by the WCS 10, the first base station BS1, the second base station BS2, the third base station BS3, the fourth base station BS5, each of the terminals 21 to 28, the base station 200, the controller 202, the processing circuit 206, the plurality of RF transceivers 208 1 to 208_n, the DSS control module 203, the rate matching circuit 207, the UE 300, the controller 302, the processing circuit 306, the RF transceiver 308, the derate matching circuit 307, the channel estimator 303, the serving base station 11, the first neighboring base station 13, the second neighboring base station 14, terminal 12, the base station 1200, the RFIC 1260, the ASIC 1210, the ASIP 1230 and/or the main processor 1270 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the memory 204, the memory 304, the memory 1250, the main memory 1290, etc.). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

While the inventive concepts have been particularly shown and described with reference to embodiments thereof, it will be understood that various changes in form and details may be made therein without departing from the spirit and scope of the following claims.

## Claims

1. A wireless communication system comprising:
a serving base station configured to support dynamic spectrum sharing (DSS) between a first network and a second network; and
a terminal configured to communicate with the serving base station based on the first network,
wherein the serving base station is configured to,
transmit location information of a cell-specific reference signal (CRS) to the terminal, the CRS being received from a neighboring base station connected to the second network,
perform rate matching on a physical downlink shared channel (PDSCH) based on the location information of the CRS to obtain a rate matched PDSCH, and
transmit the rate matched PDSCH to the terminal.

2. The wireless communication system of claim 1, wherein the first network is a new radio (NR) network; and the second network is a long term evolution (LTE) network.

3. The wireless communication system of claim 2, wherein the terminal is configured to:
receive the location information of the CRS,
identify at least one location of the CRS based on the location information of the CRS, and
receive the rate matched PDSCH based on the at least one location of the CRS.

4. The wireless communication system of claim 3, wherein the at least one location of the CRS indicates a location of a resource element (RE) allocated to the PDSCH that overlaps the CRS.

5. The wireless communication system of claim 2, wherein
the location information of the CRS includes information about a rate matching pattern of the CRS of the neighboring base station; and
the information about the rate matching pattern of the CRS comprises at least one of:
an LTE bandwidth with respect to the neighboring base station,
a location of a center frequency,
a number of antenna ports of the CRS,
a frequency shift parameter value, or
multimedia broadcast single frequency network (MBSFN) setting information.

6. The wireless communication system of claim 2, wherein the serving base station is configured to perform the rate matching on the PDSCH based on location information of a plurality of CRSs to obtain the matched PDSCH, the plurality of CRSs being received from a plurality of neighboring base stations, the plurality of neighboring base stations including the neighboring base station.

7. The wireless communication system of claim 6, wherein the serving base station and the neighboring base station are multi-transmission reception points (multi-TRPs), and the serving base station is configured to:
transmit information about rate matching patterns of the plurality of CRSs existing in a first frequency domain to the terminal, the first frequency domain being included in an overlapping frequency domain of the NR network and the LTE network, and the information about the rate matching patterns of the plurality of CRSs corresponding to each of the serving base station and the neighboring base station.

8. The wireless communication system of claim 7, wherein a maximum number of the rate matching patterns of the plurality of CRSs is determined according to a number of antenna ports of the CRS of each of the multi-TRPs.

9. An operating method of a base station configured to support dynamic spectrum sharing (DSS) between a new radio (NR) network and a long term evolution (LTE) network, the operating method comprising:
setting a cell-specific reference signal (CRS) rate matching pattern with respect to a neighboring LTE cell;
determining whether to perform CRS rate matching on the neighboring LTE cell, the CRS rate matching being based on the CRS rate matching pattern; and
performing rate matching on an NR physical downlink shared channel (PDSCH) based on the CRS rate matching pattern in response to determining to perform the CRS rate matching.

10. The operating method of claim 9, wherein the determining whether to perform CRS rate matching on the neighboring LTE cell comprises determining whether to activate the CRS rate matching pattern according to a magnitude of interference due to the CRS measured by a terminal.

11. The operating method of claim 10, wherein the magnitude of the interference due to the CRS is determined by at least one of a reference signal received power (RSRP), a signal to interference noise ratio (SINR), a received signal strength index (RSSI), or a received signal received quality (RSRQ).

12. The operating method of claim 10, further comprising:
determining whether to map NR PDSCH to resource elements (REs) to which CRSs are allocated according to the determining whether to activate the CRS rate matching pattern.

13. The operating method of claim 10, further comprising:
transmitting information about the CRS rate matching pattern and information about whether to activate the CRS rate matching pattern to the terminal, the information about the CRS rate matching pattern comprising at least one of,
an LTE bandwidth with respect to the neighboring LTE cell,
a location of a center frequency,
the number of antenna ports of the CRS,
a frequency shift parameter value, or
multimedia broadcast single frequency network (MBSFN) setting information.

14. The operating method of claim 13, further comprising:
transmitting information about whether to activate the CRS rate matching pattern to the terminal using a medium access control (MAC) control element (CE), the information about whether to activate the CRS rate matching pattern being applied to a PDSCH after a certain time has elapsed, and the certain time being longer than a slot duration.

15. The operating method of claim 13, further comprising:
transmitting the information about whether to activate the CRS rate matching pattern to the terminal using downlink control information (DCI), the information about whether to activate the CRS rate matching pattern being applied to a PDSCH after a time corresponding to a slot has elapsed.
